(19) Europäisches Patentamt
European Patent Office
Office européen des brevets

(11) EP 4 614 654 B1

(12) EUROPEAN PATENT SPECIFICATION

(45) Date of publication and mention of the grant of the patent:
**11.02.2026 Bulletin 2026/07**

(21) Application number: **24215282.5**

(22) Date of filing: **26.11.2024**

(51) International Patent Classification (IPC):
***H01M 10/0567** (2010.01)* ***H01M 10/052** (2010.01)*
***H01M 10/42** (2006.01)*

(52) Cooperative Patent Classification (CPC):
**H01M 10/0567; H01M 10/052; H01M 10/0525; H01M 10/4235;** H01M 2300/0025; Y02E 60/10

(54) **ELECTROLYTE FOR RECHARGEABLE LITHIUM BATTERY AND RECHARGEABLE LITHIUM BATTERY INCLUDING THE SAME**

ELEKTROLYT FÜR EINE WIEDERAUFLADBARE LITHIUMBATTERIE UND WIEDERAUFLADBARE LITHIUMBATTERIE DAMIT

ÉLECTROLYTE POUR BATTERIE AU LITHIUM RECHARGEABLE ET BATTERIE AU LITHIUM RECHARGEABLE LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.03.2024 KR 20240033253**

(43) Date of publication of application:
**10.09.2025 Bulletin 2025/37**

(73) Proprietor: **Samsung SDI Co., Ltd.**
**Yongin-si, Gyeonggi-do 17084 (KR)**

(72) Inventors:
- **Kim, Aeran**
  **Yongin-si, Gyeonggi-do 17084 (KR)**
- **Kim, Myunghoon**
  **Yongin-si, Gyeonggi-do 17084 (KR)**
- **Oh, Seungryong**
  **Yongin-si, Gyeonggi-do 17084 (KR)**
- **Kim, Dahyun**
  **Yongin-si, Gyeonggi-do 17084 (KR)**
- **Shin, Jeongmin**
  **Yongin-si, Gyeonggi-do 17084 (KR)**
- **Kim, Sang Hoon**
  **Yongin-si, Gyeonggi-do 17084 (KR)**
- **Kim, Sundae**
  **Yongin-si, Gyeonggi-do 17084 (KR)**
- **Yang, Yeji**
  **Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

(56) References cited:
**US-A1- 2023 344 002** **US-A1- 2024 079 650**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 614 654 B1

## Description

## BACKGROUND

### 1. Field

Embodiments of the present disclosure described herein are related to an electrolyte for a rechargeable lithium battery and a rechargeable lithium battery including the same.

### 2. Description of the Related Art

Recently, with the spread of battery using electronic devices, such as mobile phones, laptop computers, and vehicles (e.g., electric vehicles), there is an increasing (rapidly increasing) demand or desire for rechargeable batteries with relatively high energy density and relatively high capacity. Therefore, research (e.g., intensive research) has been conducted to improve performance of the rechargeable lithium batteries.

A rechargeable lithium battery includes a positive electrode, a negative electrode, and an electrolyte. The positive and negative electrodes each include an active material in which intercalation and deintercalation are possible, and generates electrical energy caused by oxidation and reduction reactions if lithium ions are intercalated and deintercalated.

A lithium salt dissolved in a non-aqueous organic solvent is used as the electrolyte of the rechargeable lithium battery. Characteristics of the rechargeable lithium battery are exhibited by complex reactions between the positive electrode and the electrolyte and between the negative electrode and the electrolyte. Accordingly, the use of an appropriate or suitable electrolyte is an important variable for improving the rechargeable lithium battery.

US2024/079650 discloses an electrolyte for a rechargeable lithium battery comprising a non-aqueous organic solvent, a lithium salt, and an additive.

## SUMMARY

The invention is defined by the appended claims. The description that follows is subjected to this limitation. Any disclosure lying outside the scope of said claims is only intended for illustrative as well as comparative purposes.

Aspects according to one or more embodiments are directed toward an electrolyte for a rechargeable lithium battery with improved high-temperature lifetime and high-temperature stability characteristics.

Aspects according to one or more embodiments are directed toward a rechargeable lithium battery including the electrolyte.

Additional aspects will be set forth in part in the description which follows and, in part, will be apparent from the description, or may be learned by practice of the presented embodiments of the present disclosure.

According to one or more embodiments of disclosure, an electrolyte for a rechargeable lithium battery includes: a non-aqueous organic solvent; a lithium salt; and an additive.

The additive includes a first compound expressed by Chemical Formula 1 and a second compound expressed by Chemical Formula 2.

Chemical Formula 1

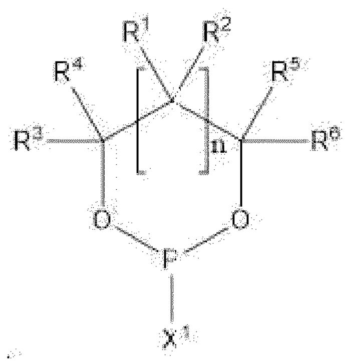

In Chemical Formula 1,

$X^1$ is a fluoro group, a chloro group, a bromo group, or an iodo group.
$R^1$ to $R^6$ are each independently be hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.
n is an integer of 0 or 1.

Chemical Formula 2

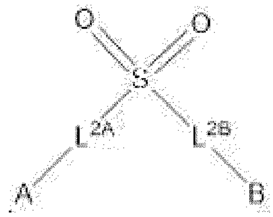

In Chemical Formula 2,

$L^{2A}$ and $L^{2B}$ are each independently be a single bond, a substituted or unsubstituted C1 to C5 alkylene group, a substituted or unsubstituted C2 to C5 alkenylene group, a substituted or unsubstituted C2 to C5 alkynylene group, or a substituted or unsubstituted C6 to C20 arylene group.
A and B are each independently be a substituted or unsubstituted C1 to C20 alkyl group, a substituted or unsubstituted C6 to C20 aryl group, or a substituted or unsubstituted C2 to C20 heteroaryl group.

At least one selected from among A and B is a group represented by Chemical Formula A.

Chemical Formula A

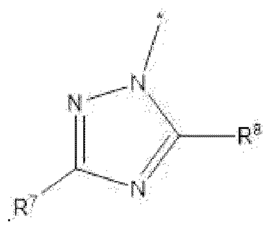

In Chemical Formula A,
$R^7$ and $R^8$ are each independently be hydrogen, halogen, a substituted or unsubstituted C1 to C10 alkyl group, or a substituted or unsubstituted C3 to C10 cycloalkyl group.
According to one or more embodiments of disclosure, a rechargeable lithium battery includes: a positive electrode that includes a positive electrode active material; a negative electrode that includes a negative electrode active material; and the electrolyte for the rechargeable lithium battery.

**BRIEF DESCRIPTION OF THE DRAWINGS**

FIG. 1 illustrates a conceptual diagram showing a rechargeable lithium battery according to one or more embodiments of present disclosure.
FIGS. 2-5 illustrate simplified diagrams each showing a rechargeable lithium battery embodiment of the present disclosure, in which FIG. 2 shows a cylindrical battery, FIG. 3 shows a prismatic battery, and FIGS. 4 and 5 show pouch-type or kind batteries.

**DETAILED DESCRIPTION**

In order to sufficiently understand the configuration and aspect of present disclosure, one or more embodiments

of present disclosure will be described with reference to the accompanying drawings. It should be noted, however, that the present disclosure is not limited to the following example embodiments, and may be implemented in one or more suitable forms. Rather, the example embodiments are provided only to disclose disclosure and let those skilled in the art fully know the scope of present disclosure.

In this description, it will be understood that, if an element is referred to as being on another element, the element can be directly on the other element or intervening elements may be present therebetween. In the drawings, thicknesses of some components are exaggerated for effectively explaining the technical contents. Like reference numerals refer to like elements throughout, and duplicative descriptions thereof may not be provided the specification.

Unless otherwise specially noted in this description, the expression of singular form may include the expression of plural form. In addition, unless otherwise specially noted, the phrase "A or B" may indicate "A but not B", "B but not A", and "A and B".

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter ($D_{50}$) where a cumulative volume is 50 volume % in a particle size distribution. The average particle diameter ($D_{50}$) may be measured by a method suitable to those skilled in the art, for example, by a particle size analyzer, a transmission electron microscope (TEM) image, or a scanning electron microscope (SEM) image. In one or more embodiments, a dynamic light-scattering measurement device is used to perform a data analysis, the number of particles is counted for each particle size range, and then from this, an average particle diameter ($D_{50}$) value may be obtained through a calculation. Dissimilarly, a laser scattering method may be utilized to measure the average particle diameter ($D_{50}$). In the laser scattering method, a target particle is distributed in a distribution solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

As utilized herein, expressions such as "at least one of", "one of", and "of (e.g., selected from among)", when preceding a list of elements, modify the entire list of elements and do not modify the individual elements of the list. For example, "at least one of a, b or c", "at least one selected from among a, b and c", and/or the like, may indicate only a, only b, only c, both (e.g., simultaneously) a and b, both (e.g., simultaneously) a and c, both (e.g., simultaneously) b and c, all of a, b, and c, or variations thereof.

The term utilized herein is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. "At least one" should not be construed as being limited to the singular. As utilized herein, the term "and/or" includes any and all combinations of one or more of the associated listed items. The terms "includes," "including," "comprises," and/or "comprising," when utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilize or operation in addition to the orientation illustrated in the drawings. For example, when a device in the drawings is turned over, elements described as "below" or "beneath" other elements or features would then be "above" or "over" the other elements or features. In some embodiments, the example term "below" may encompass both (e.g., simultaneously) orientations of above and below. The device may be otherwise oriented (rotated 90 degrees or at other orientations), and the spatially relative terms utilized herein may be interpreted accordingly.

As utilized herein, the term "substantially" and similar terms are utilized as terms of approximation and not as terms of degree, and are intended to account for the inherent deviations in measured or calculated values that would be recognized by those of ordinary skill in the art.

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any subrange subsumed within the ranges expressly recited herein.

In this description, unless otherwise separately defined, the term "substituted" refers to that at least one hydrogen of a substituent is substituted by deuterium, a halogen group, a hydroxyl group, an amino group, a C1 to C30 amine group,

a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

For example, the term "substituted" may refer to that at least one hydrogen of a substituent is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to that at least one hydrogen of a substituent is substituted by deuterium, a halogen group, a C1 to C20 alkyl group, a C6 to C30 aryl group, a C1 to C10 fluoroalkyl group, or a cyano group. In one or more embodiments, the term "substituted" may refer to that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may refer to that at least one hydrogen of a substituent is substituted by deuterium, a cyano group, a halogen group, a methyl group, an ethyl group, a propyl group, a butyl group, a phenyl group, a biphenyl group, a terphenyl group, a trifluomethyl group, or a naphthyl group.

FIG. 1 illustrates a conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

## Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material.

For example, the positive electrode 10 may further include an additive that can serve as a sacrificial positive electrode.

An amount of the positive electrode active material may range from 90 wt% to 99.5 wt% relative to 100 wt% of the positive electrode active material layer AML1. Amounts of the binder and the conductive material may be 0.5 wt% to 5 wt% relative to 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon.

The conductive material may be used to provide an electrode with conductivity, and any suitable conductive material without causing chemical change of a battery may be used as the conductive material to constitute the battery. The conductive material may include, for example, a carbon-based material such as natural graphite, artificial graphite, carbon black, acetylene black, Ketjenblack, carbon fiber, carbon nano-fiber, and carbon nano-tube; a metal powder or metal fiber containing one or more of copper, nickel, aluminum, and silver; a conductive polymer such as a polyphenylene derivative; and/or a mixture thereof.

Aluminum (Al) may be used as the current collector COL1, but the present disclosure is not limited thereto.

### Positive **Electrode** Active **Material**

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is selected from among cobalt, manganese, nickel, and/or a combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, and/or a combination thereof.

For example, the positive electrode active material may include a compound represented by any one of chemical formulae. $Li_aA_{1-b}X_bO_{2-c}D_c$(0.90≤a≤1.8, 0≤b≤0.5, 0≤c≤0.05); $Li_aMn_{2-b}X_bO_{4-c}O_c$(0.90≤a≤1.8, 0≤b≤0.5, 0≤c≤0.05); $Li_aNi_{1-b-c}Co_bX_cO_{2-a}O_a$(0.90≤a≤1.8, 0≤b≤0.5, 0≤c≤0.5, 0<α<2); $Li_aNi_{1-b-c}Mn_bX_cO_{2-\alpha}D_\alpha$(0.90≤a≤1.8, 0≤b≤0.5, 0≤c≤0.5, 0<α<2); $Li_aNi_bCo_cL^1{}_dG_eO_2$(0.90≤a≤1.8, 0≤b≤0.9, 0≤c≤0.5, 0≤d≤0.5, 0≤e≤0.1); $Li_aNiG_bO_2$(0.90≤a≤1.8, 0.001≤b≤0.1); $Li_aCoG_bO_2$ (0.90≤a≤1.8, 0.001≤b≤0.1); $Li_aMn_{1-b}G_bO_2$(0.90≤a≤1.8, 0.001≤b≤0.1); $Li_aMn_2G_bO_4$(0.90≤a≤1.8, 0.001≤b≤0.1); $Li_aMn_{1-g}G_gPO_4$(0.90≤a≤1.8, 0≤g≤0.5); $Li_{(3-f)}Fe_2(PO_4)_3$(0≤f≤2); $Li_aFePO_4$(0.90≤a≤1.8).

In the chemical formulae above, A is Ni, Co, Mn, and/or a combination thereof, X is Al, Ni, Co, Mn, Cr, Fe, Mg, Sr, V, a rare-earth element, and/or a combination thereof, D is O, F, S, P, and/or a combination thereof, G is Al, Cr, Mn, Fe, Mg, La, Ce, Sr, V, and/or a combination thereof, and $L^1$ is Mn, Al, and/or a combination thereof.

For example, the positive electrode active material may be a high nickel-based positive electrode active material having a nickel content (e.g., amount) of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high nickel-based positive electrode active material may achieve high capacity and thus may be applied to a high-capacity and high-density rechargeable lithium battery.

**Negative Electrode 20**

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material.

For example, the negative electrode active material layer AML2 may include a negative electrode active material of 90 wt% to 99 wt%, a binder of 0.5 wt% to 5 wt%, and a conductive material of 0 wt% to 5 wt%.

The binder may serve to improve attachment of negative electrode active material particles to each other and also to improve attachment of the negative electrode active material to the current collector COL2. The binder may include a non-aqueous binder, an aqueous binder, a dry binder, and/or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, and/or a combination thereof.

The aqueous binder may include styrene-butadiene rubber, (meth)acrylated styrene-butadiene rubber, (meth) acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, and/or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, and/or a combination thereof.

The conductive material may be used to provide an electrode with conductivity, and any suitable conductive material without causing chemical change of a battery may be used as the conductive material to constitute the battery. For example, the conductive material may include a carbon-based material such as natural graphite, artificial graphite, carbon black, acetylene black, Ketjenblack, carbon fiber, carbon nano-fiber, and carbon nano-tube; a metal powder or metal fiber including one or more of copper, nickel, aluminum, and silver; a conductive polymer such as a polyphenylene derivative; and/or a mixture thereof.

The current collector COL2 may include a copper foil, a nickel foil, a stainless-steel foil, a titanium foil, a nickel foam, a copper foam, a polymer substrate coated with a conductive metal, and/or a combination thereof.

**Negative Electrode Active Material**

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, and/or a combination thereof. For example, the crystalline carbon may include graphite such as non-shaped, sheet-shaped, flake-shaped, sphere-shaped, or fiber-shaped natural or artificial graphite, and the amorphous carbon may include soft carbon, hard carbon, mesophase pitch

carbon, or calcined coke.

The lithium metal alloy may include an alloy of lithium and metal that is selected from among Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, SiOx ($0<x\leq2$), Si-Q alloy (where Q is alkali metal, alkaline earth metal, Group 13 element, Group 14 element (except for Si), Group 15 element, Group 16 element, transition metal, a rare-earth element, and/or a combination thereof), or a combination thereof. The Sn-based negative electrode active material may include Sn, SnOx ($0<x\leq2$), e.g., $SnO_2$, a Sn-based alloy, or a combination thereof.

The silicon-carbon composite may be a composite of silicon and amorphous carbon. According to one or more embodiments, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

In one or more embodiments, the negative electrode active material may include a carbon-based negative electrode active material or a Si-based negative electrode active material. The negative electrode active material may further include carbon (C) and silicon (Si). For example, the carbon-based negative active material may be graphite, and the silicon-based negative electrode active material may be a silicon nano-particle.

A weight ratio of the silicon nano-particles to the graphite may range from 0.1 to 20 or 1 to 10. When the weight ratio of the silicon nano-particles to the graphite is included within the range above, it may be possible to increase a buffering effect against volume expansion of the silicon nano-particles, to achieve excellent or suitable electrical conductivity, and to improve lifetime characteristics.

The silicon nano-particle may refer to a nano-sized silicon particle. The silicon nano-particles may have an average particle diameter in a range of 50 nanometer (nm) to 300 nm, for example, from 80 nm to 200 nm. When a silicon particle has a nano-size, smooth intercalation/deintercalation of lithium ions and low ion resistance may be achieved to suppress or reduce volume expansion and to improve lifetime characteristics.

## Separator 30

Based on type or kind of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, which coating layer includes an organic material, an inorganic material, and/or a combination thereof.

The porous substrate may be a polymer layer including one selected from among polyolefin (such as polyethylene and/or polypropylene), polyester (such as polyethylene terephthalate and/or polybutylene terephthalate), polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, and polytetrafluoroethylene (e.g., Teflon), or may be a copolymer or mixture including two or more of the materials mentioned above.

The organic material may include a polyvinylidenefluoride-based copolymer or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a combination thereof, but present disclosure is not limited thereto.

The organic material and the inorganic material may be present as mixed in one coating layer or may be present as a stack of a coating layer including the organic material and a coating layer including an inorganic material.

**Electrolyte ELL**

The electrolyte ELL for the rechargeable lithium battery may include a non-aqueous organic solvent and a lithium salt.

The non-aqueous organic solvent may serve as a medium for transmitting ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, and/or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more substances.

In addition, if a carbonate-based solvent is used, a cyclic carbonate and a chain carbonate may be mixed and used, and the cyclic carbonate and the chain carbonate may be mixed in a volume ratio of 1:1 to 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers between 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB)

The following will describe in more detail an electrolyte for a rechargeable lithium battery according to one or more embodiments of the present disclosure.

An electrolyte for a rechargeable lithium battery according to one or more embodiments includes a non-aqueous organic solvent, a lithium salt, and an additive.

The additive includes a first compound represented by Chemical Formula 1 and a second compound represented by Chemical Formula 2.

Chemical Formula 1

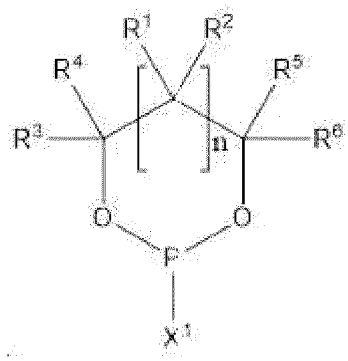

In Chemical Formula 1,

$X^1$ is a fluoro group, a chloro group, a bromo group, or an iodo group.

$R^1$ to $R^6$ are each independently be hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

n is an integer of 0 or 1.

Chemical Formula 2

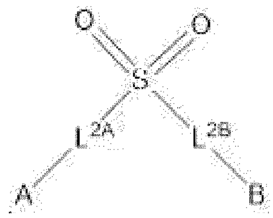

In Chemical Formula 2,

$L^{2A}$ and $L^{2B}$ are each independently be a single bond, a substituted or unsubstituted C1 to C5 alkylene group, a substituted or unsubstituted C2 to C5 alkenylene group, a substituted or unsubstituted C2 to C5 alkynylene group, or a substituted or unsubstituted C6 to C20 arylene group,
A and B are each independently be a substituted or unsubstituted C1 to C20 alkyl group, a substituted or unsubstituted C6 to C20 aryl group, or a substituted or unsubstituted C2 to C20 heteroaryl group.

At least one selected from among A and B is a group represented by Chemical Formula A.

Chemical Formula A

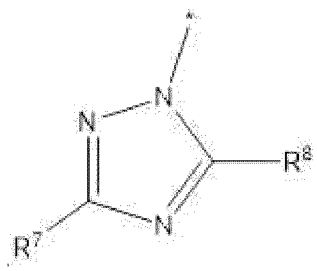

In Chemical Formula A,
$R^7$ and $R^8$ are each independently be hydrogen, halogen, a substituted or unsubstituted C1 to C10 alkyl group, or a substituted or unsubstituted C3 to C10 cycloalkyl group.
The electrolyte may be prepared by a mixing process in which the lithium salt is dissolved in the non-aqueous organic solvent, and the first additive and the second additive are added to mix. The electrolyte mixing process is a mixing process suitable in the electrolyte fabrication field, and a person skilled in the art will be able to appropriately or suitably select and use the electrolyte mixing process.
The non-aqueous organic solvent may include at least one selected from among ethylene carbonate (EC), propylene carbonate (PC), propyl propionate (PP), ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), and butylene carbonate (BC).
In one or more embodiments, the non-aqueous organic solvent may be a mixed solvent of ethylene carbonate (EC), ethylmethyl carbonate (EMC), and dimethyl carbonate (DMC).
For example, the ethylene carbonate (EC) may be included in an amount of 10 vol% to 30 vol% relative to the total volume of the non-aqueous organic solvent. The ethylmethyl carbonate (EMC) solvent may be included in an amount of 5 vol% to 15 vol% relative to the total volume of the non-aqueous organic solvent. The dimethyl carbonate (DMC) solvent may be included in an amount of 50 vol% to 80 vol% relative to the total volume of the non-aqueous organic solvent.
In one or more embodiments, the lithium salt may include $LiPF_6$.
The lithium salt may have a concentration of 0.1 M to 2.0 M. For example, the lithium salt may have a concentration of equal to or greater than 0.5 M or 1.0 M. The lithium salt may have a concentration of equal to or less than 2.0 M, equal to or less than 1.7 M, or equal to or less than 1.5 M. In the present disclosure, if the lithium salt has a concentration of 0.1 M to 2.0 M, the electrolyte may appropriately or suitably maintain its conductivity and viscosity.

**First** Compound

The first compound according to one or more embodiments of the present disclosure is expressed by Chemical

Formula 1.

Chemical Formula 1

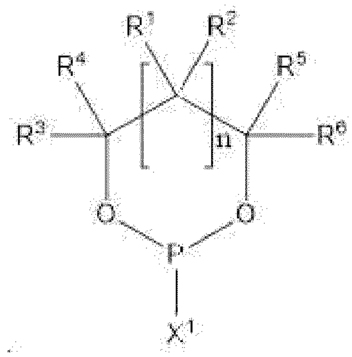

In Chemical Formula 1,

$X^1$ is a fluoro group, a chloro group, a bromo group, or an iodo group.
$R^1$ to $R^6$ are each independently be hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.
n is an integer of 0 or 1.

The first compound may form, on a surface of the negative electrode, a solid electrolyte interface (SEI) layer with high-temperature stability and excellent or suitable ion conductivity. In addition, the first compound may reduce gas generation caused by a decomposition reaction that occurs in the electrolyte during high-temperature storage. For example, a-$PO_2F$ functional group of the first compound may stabilize a pyrolyzed product of the lithium salt such as $LiPF_6$ or ions dissociated from the lithium salt to reduce the generation of gas such as HF. The formation of the excellent or suitable SEI layer and the reduction in gas generation may contribute to an improvement in lifetime characteristics of and a reduction of internal resistance of a rechargeable lithium battery.

The improvement in lifetime characteristics of and the reduction in internal resistance of the rechargeable lithium battery at high temperatures caused by the first compound may become pronounced if the first compound is used together with a high-nickel-based positive electrode active material and a negative electrode active material including graphite and silicon particles. For example, silicon particles may be utilized to increase battery capacity, but there may be a problem of an increase in battery internal resistance due to a side reaction between the silicon particles and the electrolyte. When the first compound is introduced as the additive, the side reaction between the silicon particles and the electrolyte may be suppressed or reduced not only to minimize or reduce an increase in battery internal resistance, but also to maximize or increase an increase in battery capacity.

The first compound may include a cyclic phospholane derivative. Compared to a linear phosphite derivative, the cyclic phospholane derivative may cause a rechargeable lithium battery to have a significant improvement in lifetime characteristics. This may be caused by the fact that the linear phosphite derivative induces a side reaction of $LiPF_6$ due to the dissociated -$PO_2F$ functional group and causes gas generation due to a decomposition reaction of the electrolyte during high-temperature storage.

In one or more embodiments, Chemical Formula 1 may be represented by Chemical Formula 1-1 or 1-2.

Chemical Formula 1-1

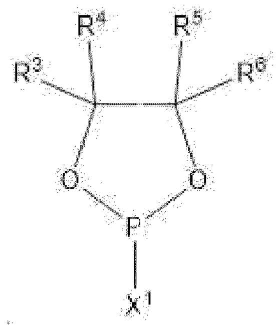

Chemical Formula 1-2

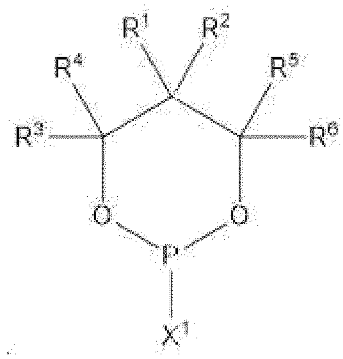

In Chemical Formula 1-1 and Chemical Formula 1-2,

$X^1$ is a fluoro group, a chloro group, a bromo group, or an iodo group.
$R^1$ to $R^6$ are each independently be hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In one or more embodiments, $R^3$ and $R^4$ of Chemical Formula 1-1 above may each be hydrogen.
At least one selected from among $R^5$ and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.
In one or more embodiments, the first compound may be any one selected from among compounds listed in Group 1. For example, the first compound may be at least one selected from among 2-fluoro-1,3,2-dioxaphospholane and 2-fluoro-4-methyl-1,3,2-dioxaphospholane.

Group 1

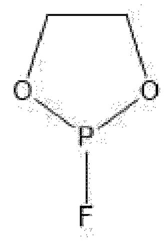

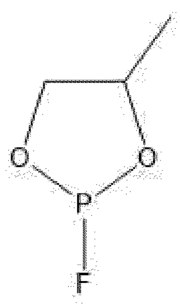

The first compound may have an amount of 0.2 parts by weight to 5.0 parts by weight based on 100 parts by weight of the electrolyte for the rechargeable lithium battery. For example, the first compound may have an amount of 0.5 parts by weight to 1.5 parts by weight based on 100 parts by weight of the electrolyte for the rechargeable lithium battery.

The amount of the first compound may refer to a weight of the first compound included in the total weight of the electrolyte. When the amount of the first compound satisfies the ranges above, it may be possible to maximize or increase the effect of reduction in gas generation and the effect of formation of the excellent or suitable SEI layer at high temperatures.

**Second Compound**

The second compound according to one or more embodiments of the present disclosure is represented by Chemical Formula 2.

Chemical Formula 2

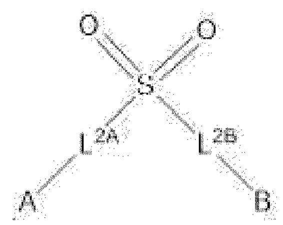

In Chemical Formula 2,

$L^{2A}$ and $L^{2B}$ are each independently be a single bond, a substituted or unsubstituted C1 to C5 alkylene group, a substituted or unsubstituted C2 to C5 alkenylene group, a substituted or unsubstituted C2 to C5 alkynylene group, or a substituted or unsubstituted C6 to C20 arylene group,

A and B are each independently be a substituted or unsubstituted C1 to C20 alkyl group, a substituted or unsubstituted C6 to C20 aryl group, or a substituted or unsubstituted C2 to C20 heteroaryl group.

At least one selected from among A and B is a group represented by Chemical Formula A.

Chemical Formula A

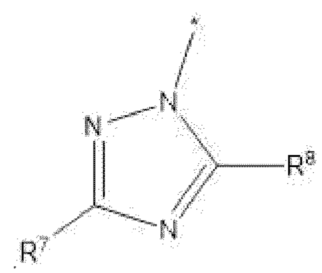

In Chemical Formula A,

$R^7$ and $R^8$ are each independently be hydrogen, halogen, a substituted or unsubstituted C1 to C10 alkyl group, or a substituted or unsubstituted C3 to C10 cycloalkyl group.

The second compound may have an effect of protecting films having passivation ability formed on surfaces of positive and negative electrodes. As the general designation in the art, the film formed on the surface of the positive electrode may be called a cathode electrolyte interface (CEI) layer, and the film formed on the surface of the negative electrode may be called a solid electrolyte interface (SEI) layer. For example, a triazole group and a sulfone group of the second compound expressed above may provide an unshared electron pair, thereby stabilizing the lithium salt in the electrolyte and providing an effect of protecting the film. It may thus be possible to minimize or reduce issues of battery lifetime reduction and resistance increase that occur if the film on the surfaces of the positive and negative electrodes are attacked by acid or a decomposition product of the lithium salt in the electrolyte. The film protection effect may contribute to an improvement in lifetime characteristics and a reduction in internal resistance of the rechargeable lithium battery in particular at high temperatures.

The second compound may have an effect of forming a film on the surface of the positive electrode. The film formed on the surface of the positive electrode may be called a cathode electrolyte interface (CEI) layer as the general designation in the art. For example, a triazole group and a sulfone group of the second compound may have a coordinate bond with metals included in the positive electrode active material, thereby forming the film on the surface of the positive

electrode. It may thus be possible to reduce gas generation caused by side reactions between the electrolyte and a cathode interface and to suppress or reduce gas generation and transition metal dissolution resulting from decomposition of the positive electrode active material. The film protection effect may contribute to an improvement in lifetime characteristics and a reduction in internal resistance of rechargeable lithium batteries in particular at high temperatures.

The second compound may also have an effect of reinforcing a film on the surface of the negative electrode, in addition to its effect of protecting the films on surfaces of the positive and negative electrodes and of generating the film on the surface of the negative electrode. Therefore, the rechargeable lithium battery may have an improvement in lifetime characteristics and a reduction in internal resistance. The film formed on the surface of the negative electrode may be called a solid electrolyte interface (SEI) layer as the general designation in the art. The film protection effect may contribute to an improvement in lifetime characteristics and a reduction in internal resistance of the rechargeable lithium battery in particular at high temperatures.

The second compound may include 1,2,4-triazole. Compared to 1,2,3-triazole, 1,2,4-triazole may significantly improve high-temperature characteristics of a rechargeable lithium battery. For example, 1,2,4-triazole may become more effective if being used with a high nickel-based positive electrode active material. When 1,2,3-triazole forms a film on the positive electrode surface by having a coordinate bond with metals contained in the positive electrode active material, a steric arrangement with nickel may be less effective compared to 1,2,4-triazole.

In one or more embodiments, at least one selected from among $L^{2A}$ and $L^{2B}$ of Chemical Formula 2 may be a substituted or unsubstituted C1 to C5 alkylene group.

In one or more embodiments, $L^{2A}$ and $L^{2B}$ of Chemical Formula 2 may each independently be a substituted or unsubstituted C1 to C5 alkylene group.

In one or more embodiments, at least one selected from among $L^{2A}$ and $L^{2B}$ of Chemical Formula 2 may be a substituted or unsubstituted C2 to C5 alkylene group.

In one or more embodiments, $L^{2A}$ and $L^{21}$ of Chemical Formula 2 may each independently be a substituted or unsubstituted C2 to C5 alkylene group.

In one or more embodiments, Chemical Formula 2 above may be represented by Chemical Formula 2-1.

Chemical Formula 2-1

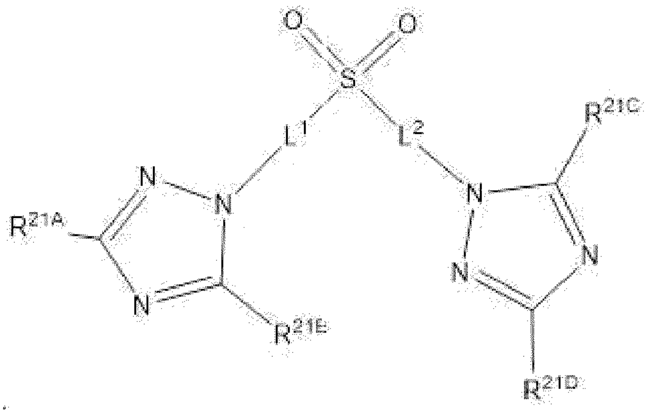

In Chemical Formula 2-1,

$L^1$ and $L^2$ are each independently be a substituted or unsubstituted C2 to C5 alkylene group.
$R^{21A}$, $R^{21B}$, $R^{21C}$, and $R^{21D}$ are each independently be hydrogen, halogen, a substituted or unsubstituted C1 to C10 alkyl group, or a substituted or unsubstituted C3 to C10 cycloalkyl group.

In one or more embodiments, the second compound may be any one selected from among compounds listed in Group 2.

Group 2

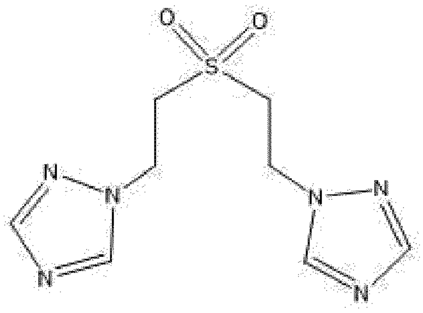

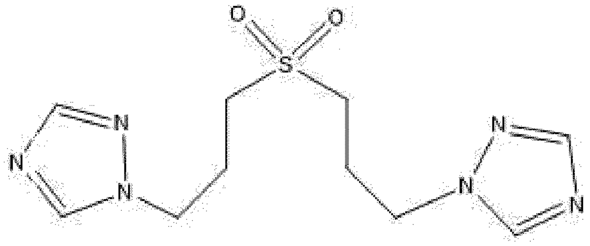

The second compound may have an amount of 1 part by weight to 5 parts by weight based on 100 parts by weight of the electrolyte for the rechargeable lithium battery. The amount of the second compound may refer to a weight of the second compound included in the total weight of the electrolyte. When the amount of the second compound satisfies the ranges above, the effects of protecting the films on the surfaces of the positive and negative electrodes, generating the film on the surface of the positive electrode, and reinforcing the film on the surface of the negative electrode may be to maximize or increase an improvement in lifetime characteristics and a reduction in internal resistance of the rechargeable lithium battery.

**Additive**

An electrolyte for a rechargeable lithium battery according to the present disclosure may include a non-aqueous organic solvent, a lithium salt, and an additive. The additive may include the first compound and the second compound.

When the second compound is used in combination with a fluorinated lithium salt compound (e.g., the first compound), a synergic effect may be produced. The combination of the first and second compounds may effectively improve issues of lifetime reduction and resistance increase of the rechargeable lithium battery. For example, the effect of the first compound in forming the excellent or suitable SEI layer and reducing the gas generation and the effect of the second compound in suppressing or reducing dissolution of transition metals of the positive electrode and reducing the gas generation may be produced concurrently to maximize or increase an improvement in characteristics of lithium batteries. This synergic effect may become pronounced in particular at high temperatures.

The additive may have an amount of 1.2 parts by weight to 10 parts by weight based on 100 parts by weight of the electrolyte for the rechargeable lithium battery. The amount of the additive may refer to a weight of the additive included in the electrolyte based on the total weight of the electrolyte. When the amount of the additive satisfies the ranges above, the rechargeable lithium battery may be maximized or increased in that improvement in capacity retention rate, an enhancement in resistance increase rate, and a reduction in dissolution amount of transition metal. This improvement in battery characteristics may become pronounced in particular at high temperatures.

A weight ratio of the second compound to the first compound in the electrolyte may range from 0.2 to 25. For example, a weight ratio of the second compound to the first compound in the electrolyte may range from 1 to 5. An improvement in high-temperature characteristics of the rechargeable lithium battery may become maximized or increased in the weight ratio range mentioned above. When the weight ratio of the second compound to the first compound is less than the ranges above, Coulombic effect may be abruptly decreased, and if the weight ratio of the second compound to the first compound is greater than the range above, a film may not be sufficiently formed on a surface of the positive electrode.

**Rechargeable Lithium Battery**

Based on a shape of a rechargeable lithium battery, the rechargeable lithium battery may be classified into cylindrical, prismatic, pouch, and coin types (kinds). In FIGS. 2 to 5 illustrating diagrams showing a rechargeable lithium battery according to one or more embodiments, FIG. 2 shows a cylindrical battery, FIG. 3 shows a prismatic battery, and FIGS. 4 and 5 show pouch-type or kind batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte. The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, or a positive electrode tab 71 and a negative electrode tab 72, which electrode tab 70 serves as an electrical path for externally inducing a current generated in the electrode assembly 40.

A rechargeable lithium battery according to one or more embodiments of the present disclosure may be applied to

automotive vehicles, mobile phones, and/or any other electrical devices, but the present disclosure is not limited thereto.

A rechargeable lithium battery according to the present disclosure may include a positive electrode including a positive electrode active material, a negative electrode including a negative electrode active material, and the aforementioned electrolyte for the rechargeable lithium battery.

The positive electrode active material may include lithium composite oxide represented by Chemical Formula 3.

Chemical Formula 3 $$Li_xM^1_yM^2_zM^3_{1-y-z}O_{2-a}X_a$$

In Chemical Formula 3, x, y, z, and a may be such that $0.5 \leq x \leq 1.8$, $0 \leq a \leq 0.05$, $0 < y \leq 1$, $0 \leq z \leq 1$, and $0 \leq y+z \leq 1$.

$M^1$, $M^2$, and $M^3$ may each independently include at least one element selected from among metals such as Ni, Co, Mn, Al, B, Ba, Ca, Ce, Cr, Fe, Mo, Nb, Si, Sr, Mg, Ti, V, W, Zr, La, and/or a combination thereof.

X may include at least one element selected from among F, S, P, and Cl.

In one or more embodiments, in Chemical Formula 3, $M^1$ may be Ni, y may be $0.8 \leq y \leq 1$, and z may be $0 \leq z \leq 0.2$. In one or more embodiments, in Chemical Formula 3, $M^1$ may be Ni, $M^2$ may be Co, and $M^3$ may be Al. Dissimilarly, in Chemical Formula 3, $M^1$ may be Ni, $M^2$ may be Co, and $M^3$ may be Mn.

The negative electrode active material may be a carbon-based negative electrode active material, a Si-based negative electrode active material, a Sn-based negative electrode active material, and/or a combination thereof.

In one or more embodiments, the negative electrode active material may include a carbon-based negative electrode active material or a Si-based negative electrode active material. For example, the carbon-based negative active material may be graphite, and the silicon-based negative electrode active material may be a silicon nano-particle. A weight ratio of the silicon nano-particles to the graphite may range from about 0.1 to about 20. When the graphite and the silicon nano-particles satisfy the combination and weight ratio above, the rechargeable lithium battery may have a maximum improvement in high-temperature performance.

In a rechargeable lithium battery according to one or more embodiments of the present disclosure, a non-aqueous electrolyte may be decomposed during an initial charge-discharge to form a film having passivation ability on surfaces of positive and negative electrodes to improve high-temperature storage characteristics. The film may be deteriorated due to acid such as $HF^-$ and/or $PF_5^-$ produced by thermal decomposition of lithium salts ($LiPF_6$ and/or the like) widely used lithium ion batteries. This acid attack may elute transition metal elements from the positive electrode and increase a surface resistance of the electrode caused by a structural change of the surface. Thus, a theoretical capacity may be reduced due to loss of metal elements which are redox (reduction and oxidation) centers, which may result in a reduction in capacity. In addition, the eluted transition metal ions may be electrodeposited on the negative electrode that reacts in a strong reduction potential range. Therefore, electrons may be consumed and the film may be destroyed during the electrodeposition, and accordingly the surface of the negative electrode may be exposed to cause an additional electrolyte decomposition reaction. There may thus be an increase in resistance of the negative electrode and in irreversible capacity, and as a result, there may be a problem of substantially continuous reduction in cell capacity.

In the present disclosure, a $-PO_2F$ functional group of the first compound and a triazole group and a sulfone group of the second compound expressed above may provide an unshared electron pair to capture $PF_5^-$ and stabilize a $LiPF_6$ salt, with the result that it may be possible to remove the acid led by decomposition of the lithium salt.

In addition, a triazole group and a sulfone group included in the second compound may form a film on the surface of the positive electrode to suppress or reduce decomposition of the positive electrode active material, and thus it may be possible to suppress or reduce gas generation and transition metal dissolution caused by decomposition of the positive electrode active material.

Moreover, a triazole group and a sulfone group included in the second compound may also have an effect of reinforcing the SEI layer on the surface of the negative electrode, and thus there may be a further improvement in battery lifetime characteristics and a reduction in battery internal resistance.

The positive electrode active material of the rechargeable lithium battery may include one or more of lithium-cobalt-based oxide, lithium nickel-based oxide, lithium manganese-based oxide, lithium iron phosphate-based compounds, cobalt-free nickel-manganese-based oxide, and any combination thereof. In one or more embodiments, the positive electrode active material of the rechargeable lithium battery may include nickel, cobalt, and aluminum. In one or more embodiments, the positive electrode active material of the rechargeable lithium battery may include nickel, cobalt, and manganese.

The negative electrode active material of the rechargeable lithium battery may include a carbon-based negative electrode active material, a silicon-based negative electrode active material, or any combination thereof. In one or more embodiments, the negative electrode active material of the rechargeable lithium battery may include a carbon-based negative electrode active material and a silicon-based negative electrode active material. For example, the carbon-based negative active material may be graphite, and the silicon-based negative electrode active material may be a silicon nano-particle. A weight ratio of the silicon nano-particles to the graphite may range from about 0.1 to about 20.

The following will describe Embodiments and Comparative Examples of the present disclosure.

**Embodiment 1**

**(1) Preparation of Electrolyte**

1.5M $LiPF_6$ was dissolved in a non-aqueous organic solvent including ethylene carbonate (EC), ethylmethyl carbonate (EMC), and dimethyl carbonate (DMC) mixed in a volume ratio of about 20:10:70, and an additive was added to prepare an electrolyte.

The additive may include a first compound in an amount of 1 part by weight based on 100 parts by weight of the electrolyte and a second compound in an amount of 1 part by weight based on 100 parts by weight of the electrolyte.

A material expressed by Chemical Formula 1A and a material expressed by Chemical Formula 2A were respectively used as the first compound and the second compound.

Chemical Formula 1A

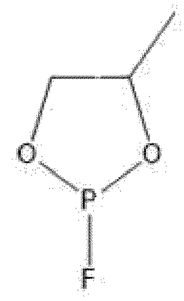

Chemical Formula 2A

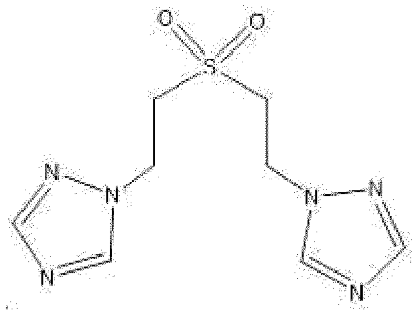

**(2) Fabrication of Rechargeable Lithium Battery**

$LiNi_{0.91}Co_{0.07}Al_{0.02}O_2$ as a positive electrode active material, polyvinylidene fluoride as a binder, and Ketjenblack as a conductive material were mixed in a weight ratio of 97:2:1, and the mixture was distributed in N-methyl pyrrolidone to prepare a positive electrode active material slurry.

The positive electrode active material slurry was coated on an aluminum current collector of 14 μm in thickness, dried at 110°C, and then pressed to manufacture a positive electrode.

Artificial graphite and silicon nano-particles mixed in a weight ratio of 93:7 as a negative electrode active material, styrene butadiene rubber (SBR) as a binder, and carboxymethyl cellulose (CMC) as a thickener were mixed in a weight ratio of 97:1:2, and the mixture was distributed in distilled water to prepare a negative electrode active material slurry.

The negative electrode active material slurry was coated on a copper current collector of 10 μm in thickness, dried at 100°C, and then pressed to manufacture a negative electrode.

The positive electrode, the negative electrode, and a polyethylene separator of 25 μm in thickness were assembled to manufacture an electrode assembly, and the electrolyte was introduced to fabricate a rechargeable lithium battery.

**Embodiment 2**

An electrolyte and a rechargeable lithium battery were fabricated by the same method as that of Embodiment 1,

except that the additive included the first compound in an amount of 1 part by weight based on 100 parts by weight of the electrolyte and the second compound in an amount of 2 parts by weight based on 100 parts by weight of the electrolyte.

**Embodiment 3**

An electrolyte and a rechargeable lithium battery were fabricated by the same method as that of Embodiment 1, except that the additive included the first compound in an amount of 1 part by weight based on 100 parts by weight of the electrolyte and the second compound in an amount of 3 parts by weight based on 100 parts by weight of the electrolyte.

**Embodiment 4**

An electrolyte and a rechargeable lithium battery were fabricated by the same method as that of Embodiment 1, except that the additive included the first compound in an amount of 1 part by weight based on 100 parts by weight of the electrolyte and the second compound in an amount of 4 parts by weight based on 100 parts by weight of the electrolyte.

**Embodiment 5**

An electrolyte and a rechargeable lithium battery were fabricated by the same method as that of Embodiment 1, except that the additive included the first compound in an amount of 1 part by weight based on 100 parts by weight of the electrolyte and the second compound in an amount of 5 parts by weight based on 100 parts by weight of the electrolyte.

**Comparative Example 1**

An electrolyte and a rechargeable lithium battery were fabricated by the same method as that of Embodiment 1, except that no additive is added.

**Comparative Example 2**

An electrolyte and a rechargeable lithium battery were fabricated by the same method as that of Embodiment 1, except that the additive included the first compound in an amount of 1 part by weight based on 100 parts by weight of the electrolyte and did not include the second compound.

**Comparative Example 3**

An electrolyte and a rechargeable lithium battery were fabricated by the same method as that of Embodiment 1, except that the additive did not include the first compound and included the second compound in an amount of 1 part by weight based on 100 parts by weight of the electrolyte.

**Evaluation Example 1: Capacity Retention Rate at High-Temperature Storage**

A high-temperature capacity retention rate was measured to evaluate high-temperature characteristics. Rechargeable lithium batteries fabricated in Embodiments and Comparative Examples were charged at room temperature (25°C) to SOC 100% under the condition of constant current-constant voltage (CC/CV), 0.33C, 4.25V, and 0.025C Cut-off, and then were stored at 55°C for 60 days. Afterwards, a discharge capacity was measured to calculate a high-temperature capacity retention rate. The result was listed in Table 1. The high-temperature capacity retention rate was calculated according to Equation 1.

Capacity retention rate (%) = (discharge capacity after storage at 55°C for 60 days / initial discharge capacity) $\times$ 100 Equation 1

**Evaluation Example 2: Resistance Increase Rate at High-Temperature Storage**

Rechargeable lithium batteries fabricated in Embodiments and Comparative Examples were charged at room temperature (25°C) to SOC 100% under the condition of constant current-constant voltage (CC/CV), 0.33C, 4.25V, and 0.025C Cut-off, and then an initial battery resistance (DC-IR) and a battery resistance (DC-IR) after storage at 55°C for 60 days were measured. A resistance increase rate was measured and the result was listed in Table 1. A resistance (DC-IR), which is calculated from a difference in current and voltage if different currents are applied, was obtained with Ohm's law $\Delta R=\Delta V/\Delta I$ after being discharged at 1C for 30 seconds in an initial full charge state. The resistance increase rate was

calculated according to Equation 2.

Resistance increase rate (%) = [[battery resistance (DC-IR) after 60 days / initial battery resistance (DC-IR)] - 1] × 100 Equation 2

**Evaluation Example 3: Dissolution Amount of Transition Metal (Ni) at High-Temperature Storage**

Rechargeable lithium batteries fabricated in Embodiments and Comparative Examples were charged to SOC 100% under the condition of 55°C, 0.33C (CC/CV, 4.25V, 0.025C Cut-off), and then a dissolution amount of nickel (Ni) was measured after storage at 55°C for 60 days. The result was listed in Table 1.

Table 1

| | Amount | | Evaluation result | | | | |
|---|---|---|---|---|---|---|---|
| | First compo und (wt%) | Second compo und (wt%) | Initial capacit y (mAh) | Capacity retention rate (%) | Initial resistanc e (mohm) | Resistan ce increase rate (%) | Dissolution amount of transition metal (Ni) (ppm) |
| Comparative Example 1 | 0 | 0 | 5409 | 89.9 | 27.4 | 21.9 | 151 |
| Comparative Example 2 | 1 | 0 | 5401 | 90.4 | 28.1 | 18.3 | 137 |
| Comparative Example 3 | 0 | 1 | 5405 | 90.7 | 27.6 | 17.0 | 115 |
| Embodiment 1 | 1 | 1 | 5395 | 91.5 | 28.2 | 15.8 | 107 |
| Embodiment 2 | 1 | 2 | 5389 | 92.7 | 28.4 | 14.1 | 73 |
| Embodiment 3 | 1 | 3 | 5385 | 92.4 | 29.5 | 13.7 | 67 |
| Embodiment 4 | 1 | 4 | 5382 | 92.6 | 29.6 | 13.4 | 55 |
| Embodiment 5 | 1 | 5 | 5383 | 92.8 | 29.5 | 12.8 | 49 |

Referring to Table 1, it may be ascertained that the capacity retention rate is excellent or suitable at a high temperature (55°C) in the cases (Embodiments 1 to 5) in which the electrolyte includes a first compound and a second compound according to the present disclosure, compared to the case (Comparative Example 1) in which the electrolyte includes none of a first compound and a second compound, the case (Comparative Example 2) in which the electrolyte includes only a first compound, and the case (Comparative Example 3) in which the electrolyte includes only a second compound. For example, it may be ascertained that Embodiments 1 to 5 have an excellent or suitable effect of improvement in battery lifetime characteristics.

Referring still to Table 1, it may be ascertained that the resistance increase rate is low at a high temperature (55°C) in the cases (Embodiments 1 to 5) in which the electrolyte includes a first compound and a second compound according to the present disclosure, compared to the case (Comparative Example 1) in which the electrolyte includes none of a first compound and a second compound, the case (Comparative Example 2) in which the electrolyte includes only a first compound, and the case (Comparative Example 3) in which the electrolyte includes only a second compound. For example, it may be ascertained that Embodiments 1 to 5 have an excellent or suitable effect of reduction in resistance.

Referring back to Table 1, it may be ascertained that the dissolution amount of transition metal (Ni) is low at a high temperature (55°C) in the cases (Embodiments 1 to 5) in which the electrolyte includes a first compound and a second compound according to the present disclosure, compared to the case (Comparative Example 1) in which the electrolyte includes none of a first compound and a second compound, the case (Comparative Example 2) in which the electrolyte includes only a first compound, and the case (Comparative Example 3) in which the electrolyte includes only a second compound. For example, it may be ascertained that Embodiments 1 to 5 have an excellent or suitable effect of suppression

in dissolution amount of transition metal.

An electrolyte for a rechargeable lithium battery according to one or more embodiments may exhibit an effect of improvement in lifetime characteristics and reduction in internal resistance of the rechargeable lithium battery. These effects may become pronounced at high temperatures.

**Claims**

**1.** An electrolyte for a rechargeable lithium battery comprising:

a non-aqueous organic solvent;
a lithium salt; and
an additive,
wherein the additive comprises a first compound represented by Chemical Formula 1 and a second compound represented by Chemical Formula 2,

Chemical Formula 1

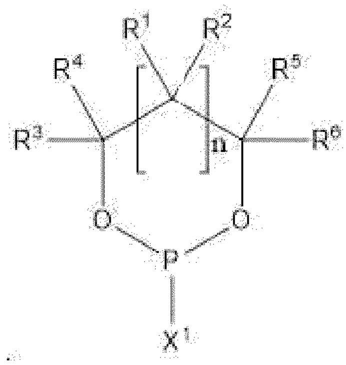
,

wherein in Chemical Formula 1,
$X^1$ is a fluoro group, a chloro group, a bromo group, or an iodo group,
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1,

Chemical Formula 2

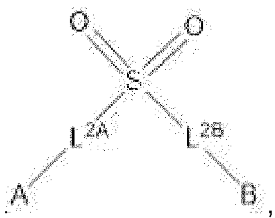
,

wherein in Chemical Formula 2,
$L^{2A}$ and $L^{2B}$ are each independently a single bond, a substituted or unsubstituted C1 to C5 alkylene group, a substituted or unsubstituted C2 to C5 alkenylene group, a substituted or unsubstituted C2 to C5 alkynylene group, or a substituted or unsubstituted C6 to C20 arylene group,
A and B are each independently a substituted or unsubstituted C1 to C20 alkyl group, a substituted or unsubstituted C6 to C20 aryl group, or a substituted or unsubstituted C2 to C20 heteroaryl group, and
at least one selected from among A and B is a group represented by Chemical Formula A,

Chemical Formula A

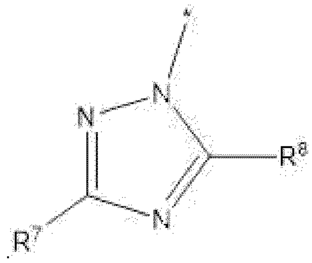

,

wherein in Chemical Formula A,
$R^7$ and $R^8$ are each independently hydrogen, halogen, a substituted or unsubstituted C1 to C10 alkyl group, or a substituted or unsubstituted C3 to C10 cycloalkyl group,
wherein the term "substituted" refers to that at least one hydrogen of a substituent is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

2. The electrolyte as claimed in claim 1, wherein an amount of the first compound is 0.2 parts by weight to 5.0 parts by weight based on 100 parts by weight of the electrolyte for the rechargeable lithium battery.

3. The electrolyte as claimed in claim 1 or 2, wherein an amount of the second compound is 1 part by weight to 5 parts by weight based on 100 parts by weight of the electrolyte for the rechargeable lithium battery.

4. The electrolyte as claimed in any one of the preceding claims, wherein an amount of the additive is 1.2 parts by weight to 10 parts of weight based on 100 parts by weight of the electrolyte for the rechargeable lithium battery.

5. The electrolyte as claimed in any one of the preceding claims, wherein a weight ratio of the second compound to the first compound in the additive is in a range of 0.2 to 25.

6. The electrolyte as claimed in claim 5, wherein a weight ratio of the second compound to the first compound in the additive is in a range of 1 to 5.

7. The electrolyte as set forth in any one of the preceding claims, wherein Chemical Formula 1 is represented by at least one of Chemical Formula 1-1 or Chemical Formula 1-1,

Chemical Formula 1-2

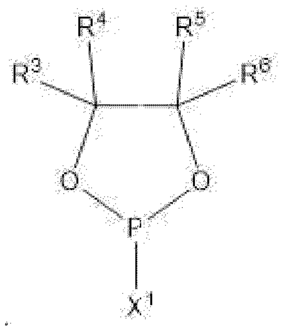

Chemical Formula 1-2

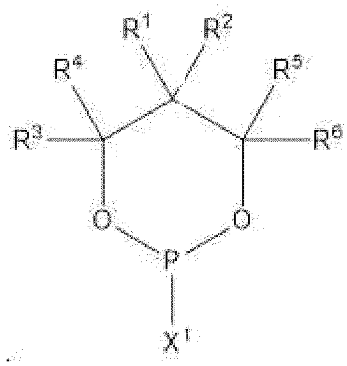

,

in Chemical Formula 1-1 and Chemical Formula 1-2,

$X^1$ being a fluoro group, a chloro group, a bromo group, or an iodo group, and
$R^1$ to $R^6$ being each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**8.** The electrolyte as claimed in claim 7, wherein the first compound is any one selected from among compounds listed in Group 1,

Group 1

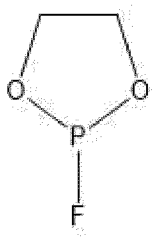

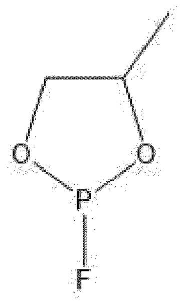

.

**9.** The electrolyte as set forth in any one of the preceding claims, wherein at least one selected from among $L^{2A}$ and $L^{2B}$ is a substituted or unsubstituted C1 to C5 alkylene group.

**10.** The electrolyte as set forth in any one of claims 1 to 8, wherein Chemical Formula 2 is represented by Chemical Formula 2-1,

Chemical Formula 2-1

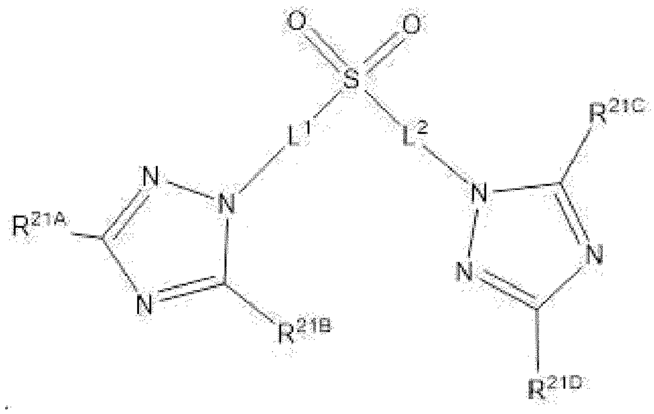

,

and

wherein in Chemical Formula 2-1,

$L^1$ and $L^2$ are each independently a substituted or unsubstituted C2 to C5 alkylene group, and
$R^{21A}$, $R^{21B}$, $R^{21C}$, and $R^{21D}$ are each independently hydrogen, halogen, a substituted or unsubstituted C1 to C10 alkyl group, or a substituted or unsubstituted C3 to C10 cycloalkyl group.

**11.** The electrolyte as claimed in claim 10, wherein the second compound is any one selected from among compounds listed in Group 2,

Group 2

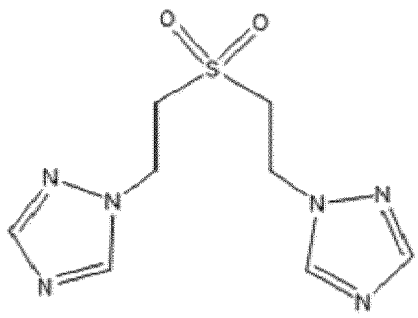

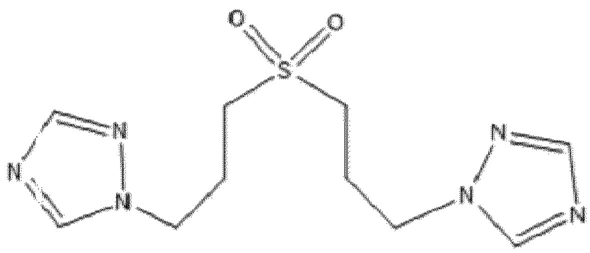

.

**12.** A rechargeable lithium battery (100) comprising:

a positive electrode (10) that comprises a positive electrode active material;
a negative electrode (20) that comprises a negative electrode active material; and the electrolyte for the rechargeable lithium battery as claimed in claim 1.

**13.** The rechargeable lithium battery as claimed in claim 12, wherein the positive electrode active material comprises lithium composite oxide represented by Chemical Formula 3,

Chemical Formula 3 $Li_xM^1_yM^2_zM^3_{1-y-z}O_{2-a}X_a$,

and

wherein in Chemical Formula 3,

$0.5 \leq x \leq 1.8$, $0 \leq a \leq 0.05$, $0 < y \leq 1$, $0 \leq z \leq 1$, and $0 \leq y+z \leq 1$,
$M^1$, $M^2$, and $M^3$ each independently comprise at least one element selected from among metals such as Ni, Co,

Mn, Al, B, Ba, Ca, Ce, Cr, Fe, Mo, Nb, Si, Sr, Mg, Ti, V, W, Zr, La, and a combination thereof, and
X comprises at least one element selected from among F, S, P, and Cl.

**14.** The rechargeable lithium battery as claimed in claim 13, wherein in Chemical Formula 3, $M^1$ is Ni, $0.8 \leq y \leq 1$, and $0 \leq z \leq 0.2$.

**15.** The rechargeable lithium battery as set forth in any one of claims 12 to 14, wherein the negative electrode active material comprises a carbon-based negative electrode active material, a Si-based negative electrode active material, a Sn-based negative electrode active material, or a combination thereof.

**Patentansprüche**

**1.** Elektrolyt für eine wiederaufladbare Lithiumbatterie, umfassend:

ein nichtwässriges organisches Lösungsmittel;
ein Lithiumsalz; und
ein Additiv,
wobei das Additiv eine erste Verbindung, die durch Chemische Formel 1 dargestellt ist, und eine zweite Verbindung, die durch Chemische Formel 2 dargestellt ist, umfasst,

Chemische Formel 1

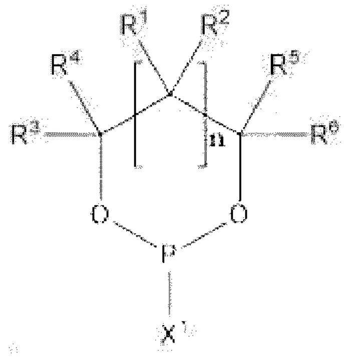

,

wobei in Chemischer Formel 1,
$X^1$ eine Fluorgruppe, eine Chlorogruppe, eine Bromgruppe oder eine Iodgruppe ist,
$R^1$ bis $R^6$ jeweils unabhängig Wasserstoff, eine Cyanogruppe, eine substituierte oder unsubstituierte C1- bis C20-Alkylgruppe, eine substituierte oder unsubstituierte C1- bis C20-Alkoxygruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cycloalkylgruppe, eine substituierte oder unsubstituierte C6- bis C20-Arylgruppe oder eine substituierte oder unsubstituierte C2- bis C20-Heteroarylgruppe sind, und
n eine ganze Zahl von 0 oder 1 ist,

Chemische Formel 2

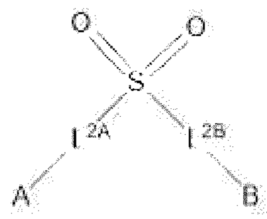

,

wobei in Chemischer Formel 2,
$L^{2A}$ und $L^{2B}$ jeweils unabhängig eine Einfachbindung, eine substituierte oder unsubstituierte C1- bis C5-Alkylengruppe, eine substituierte oder unsubstituierte C2- bis C5-Alkenylengruppe, eine substituierte oder unsubstituierte C2- bis C5-Alkinylengruppe oder eine substituierte oder unsubstituierte C6- bis C20-Arylenylgruppe sind,
A und B jeweils unabhängig eine substituierte oder unsubstituierte C1- bis C20-Alkylgruppe, eine substituierte oder unsubstituierte C6- bis C20-Arylgruppe oder eine substituierte oder unsubstituierte C2- bis C20-Heteroarylgruppe sind, und
mindestens eine aus A und B eine Gruppe ist, die durch Chemische Formel A dargestellt ist,

Chemische Formel A

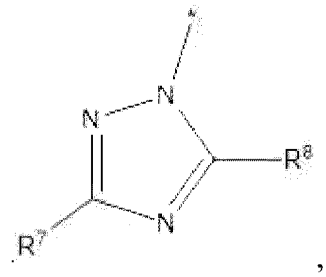

,

wobei in Chemischer Formel A,
$R^7$ und $R^8$ jeweils unabhängig Wasserstoff, Halogen, eine substituierte oder unsubstituierte C1- bis C10-Alkylgruppe oder eine substituierte oder unsubstituierte C3- bis C10-Cycloalkylgruppe sind,
wobei der Begriff "substituiert" sich darauf bezieht, dass mindestens ein Wasserstoff eines Substituenten durch Deuterium, eine Halogengruppe, eine Hydroxylgruppe, eine Aminogruppe, eine C1- bis C30-Aminogruppe, eine Nitrogruppe, eine Cl- bis C40-Silylgruppe, eine C1- bis C30-Alkylgruppe, eine C1- bis C10-Alkylsilylgruppe, eine C6- bis C30-Arylsilylgruppe, eine C3- bis C30-Cycloalkylgruppe, eine C3- bis C30-Heterocycloalkylgruppe, eine C6- bis C30-Arylgruppe, eine C2- bis C30-Heteroarylgruppe, eine C1- bis C20-Alkoxygruppe, eine C1- bis C10-Fluoralkylgruppe oder eine Cyanogruppe substituiert ist.

**2.** Elektrolyt nach Anspruch 1, wobei eine Menge der ersten Verbindung 0,2 Gewichtsteile bis 5,0 Gewichtsteile, bezogen auf 100 Gewichtsteile des Elektrolyten für die wiederaufladbare Lithiumbatterie, beträgt.

**3.** Elektrolyt nach Anspruch 1 oder 2, wobei eine Menge der zweiten Verbindung 1 Gewichtsteil bis 5 Gewichtsteile, bezogen auf 100 Gewichtsteile des Elektrolyten für die wiederaufladbare Lithiumbatterie, beträgt.

**4.** Elektrolyt nach einem der vorhergehenden Ansprüche, wobei eine Menge des Additivs 1,2 Gewichtsteile bis 10 Gewichtsteile, bezogen auf 100 Gewichtsteile des Elektrolyten für die wiederaufladbare Lithiumbatterie, beträgt.

**5.** Elektrolyt nach einem der vorhergehenden Ansprüche, wobei ein Gewichtsverhältnis der zweiten Verbindung zur ersten Verbindung in dem Additiv in einem Bereich von 0,2 bis 25 liegt.

**6.** Elektrolyt nach Anspruch 5, wobei ein Gewichtsverhältnis der zweiten Verbindung zur ersten Verbindung in dem Additiv in einem Bereich von 1 bis 5 liegt.

**7.** Elektrolyt nach einem der vorhergehenden Ansprüche, wobei Chemische Formel 1 durch mindestens eine von Chemischer Formel 1-1 oder Chemischer Formel 1-2 dargestellt ist,

Chemische Formel 1-1,

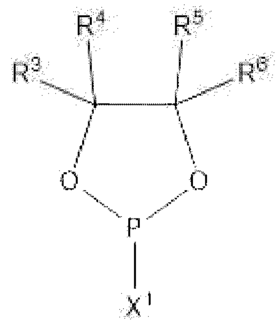

Chemische Formel 1-2

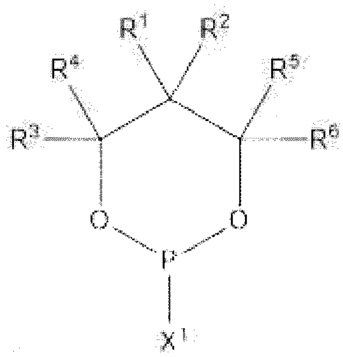

,

in Chemischer Formel 1-1 und Chemischer Formel 1-2,

$X^1$ eine Fluorgruppe, eine Chlorogruppe, eine Bromgruppe oder eine Iodgruppe ist, und $R^1$ bis $R^6$ jeweils unabhängig Wasserstoff, eine substituierte oder unsubstituierte C1- bis C10-Alkylgruppe, eine substituierte oder unsubstituierte C1- bis C10-Alkoxygruppe, eine substituierte oder unsubstituierte C2- bis C10-Alkenylgruppe oder eine substituierte oder unsubstituierte C2- bis C10-Alkinylgruppe sind.

**8.** Elektrolyt nach Anspruch 7, wobei die erste Verbindung eine beliebige ist, die aus in Gruppe 1 aufgeführten Verbindungen ausgewählt ist,

Gruppe 1

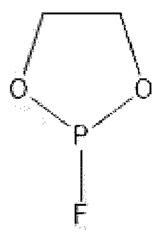

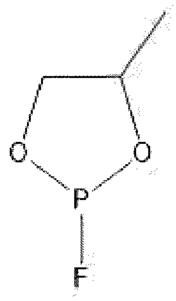

.

**9.** Elektrolyt nach einem der vorhergehenden Ansprüche, wobei mindestens eine aus $L^{2A}$ und $L^{2B}$ eine substituierte oder unsubstituierte C1- bis C5-Alkylengruppe ist.

**10.** Elektrolyt nach einem der Ansprüche 1 bis 8, wobei Chemische Formel 2 durch Chemische Formel 2-1 dargestellt ist,

Chemische Formel 2-1

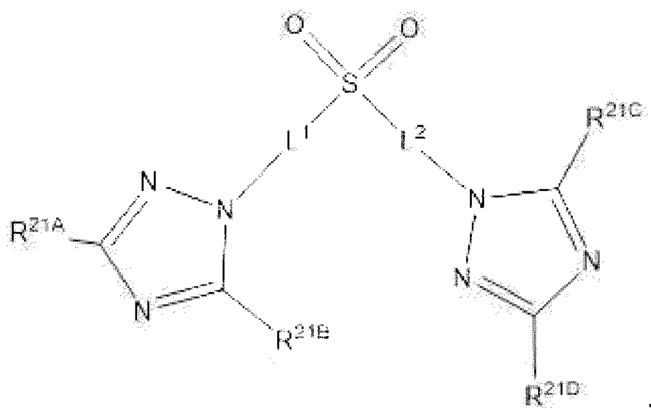

,

und
wobei in Chemischer Formel 2-1,
$L^1$ und $L^2$ jeweils unabhängig eine substituierte oder unsubstituierte C2- bis C5-Alkylengruppe sind, und $R^{21A}$, $R^{21B}$, $R^{21C}$ und $R^{21D}$ jeweils unabhängig Wasserstoff, Halogen, eine substituierte oder unsubstituierte C1- bis C10-Alkylgruppe oder eine substituierte oder unsubstituierte C3- bis C10-Cycloalkylgruppe sind.

**11.** Elektrolyt nach Anspruch 10, wobei die zweite Verbindung eine beliebige ist, die aus den in Gruppe 2 aufgeführten Verbindungen ausgewählt ist,

Gruppe 2

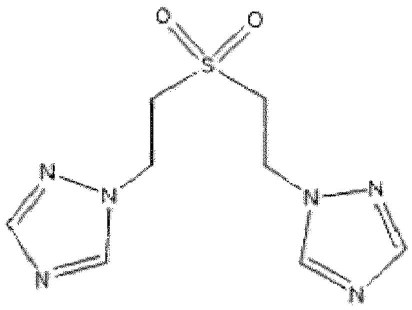

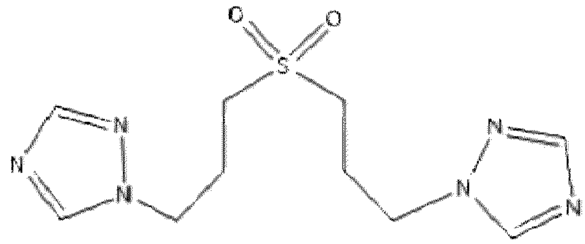

.

**12.** Wiederaufladbare Lithiumbatterie (100), umfassend:

eine positive Elektrode (10), die ein positives Elektrodenaktivmaterial umfasst;
eine negative Elektrode (20), die ein negatives Elektrodenaktivmaterial umfasst; und den Elektrolyten für die wiederaufladbare Lithiumbatterie nach Anspruch 1.

**13.** Wiederaufladbare Lithiumbatterie nach Anspruch 12, wobei das positive Elektrodenaktivmaterial ein Lithiumkompositoxid umfasst, das durch Chemische Formel 3 dargestellt ist,

Chemische Formel 3 $Li_xM^1_yM^2_zM^3_{1-y-z}O_{2-a}X_a$,

und wobei in Chemischer Formel 3,

$0{,}5 \le x \le 1{,}8$, $0 \le a \le 0{,}05$, $0 \le y \le 1$, $0 \le z \le 1$ und $0 \le y+z \le 1$,
$M^1$, $M^2$, and $M^3$ jeweils unabhängig mindestens ein Element, ausgewählt aus Metallen wie Ni, Co, Mn, Al, B, Ba, Ca, Ce, Cr, Fe, Mo, Nb, Si, Sr, Mg, Ti, V, W, Zr, La und einer Kombination davon, umfassen, und
X mindestens ein Element, ausgewählt aus F, S, P und Cl, umfasst.

**14.** Wiederaufladbare Lithiumbatterie nach Anspruch 13, wobei in Chemischer Formel 3, $M^1$ Ni ist, $0{,}8 \le y \le 1$ und $0 \le z \le 0{,}2$.

**15.** Wiederaufladbare Lithiumbatterie nach einem der Ansprüche 12 bis 14, wobei das negative Elektrodenaktivmaterial ein kohlenstoffbasiertes negatives Elektrodenaktivmaterial, ein Si-basiertes negatives Elektrodenaktivmaterial, ein Sn-basiertes negatives Elektrodenaktivmaterial oder eine Kombination davon umfasst.

## Revendications

**1.** Électrolyte pour une batterie rechargeable au lithium comportant :

un solvant organique non aqueux ;
un sel de lithium ; et
un additif,
dans lequel l'additif comporte un premier composé représenté par la Formule chimique 1 et un deuxième composé représenté par la Formule chimique 2,

Formule chimique 1

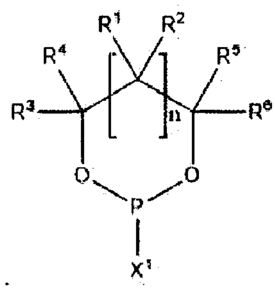

,

dans lequel, dans la Formule chimique 1,
$X^1$ est un groupe fluoro, un groupe chloro, un groupe bromo ou un groupe iodo,
$R^1$ à $R^6$ sont chacun indépendamment hydrogène, un groupe cyano, un groupe alkyle en C1 à C20 substitué ou non substitué, un groupe alcoxy en C1 à C20 substitué ou non substitué, un groupe alcényle en C2 à C20 substitué ou non substitué, un groupe alcynyle en C2 à C20 substitué ou non substitué, un groupe cycloalkyle en C3 à C20 substitué ou non substitué, un groupe aryle en C6 à C20 substitué ou non substitué, ou un groupe hétéroaryle en C2 à C20 substitué ou non substitué, et
n est un nombre entier de 0 ou 1,

Formule chimique 2

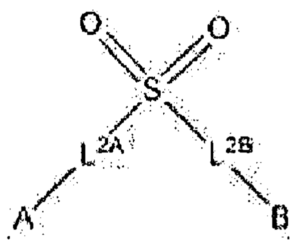

,

dans lequel, dans la Formule chimique 2,
$L^{2A}$ et $L^{2B}$ sont chacun indépendamment une liaison unique, un groupe alkylène en C1 à C5 substitué ou non substitué, un groupe alcénylène en C2 à C5 substitué ou non substitué, un groupe alcynylène en C2 à C5 substitué ou non substitué, ou un groupe arylène en C6 à C20 substitué ou non substitué,
A et B sont chacun indépendamment un groupe alkyle en C1 à C20 substitué ou non, un groupe aryle en C6 à C20 substitué ou non, ou un groupe hétéroaryle en C2 à C20 substitué ou non, et
au moins l'un sélectionné parmi A et B est un groupe représenté par la Formule chimique A,

Formule chimique A

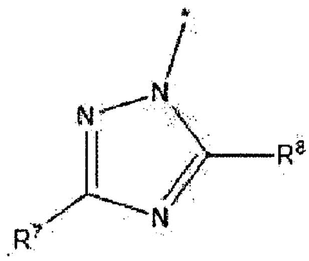

,

dans lequel, dans la Formule chimique A,
$R^7$ et $R^8$ sont chacun indépendamment hydrogène, halogène, un groupe alkyle en C1 à C10 substitué ou non substitué, ou un groupe cycloalkyle en C3 à C10 substitué ou non substitué,

dans lequel le terme « substitué » signifie qu'au moins un hydrogène d'un substituant est substitué par le deutérium, un groupe halogène, un groupe hydroxyle, un groupe amino, un groupe amine en C1 à C30, un groupe nitro, un groupe silyle en C1 à C40, un groupe alkyle en C1 à C30, un groupe alkylsilyle en C1 à C10, un groupe arylsilyle en C6 à C30, un groupe cycloalkyle en C3 à C30, un groupe hétérocycloalkyle en C3 à C30, un groupe aryle en C6 à C30, un groupe hétéroaryle en C2 à C30, un groupe alcoxy en C1 à C20, un groupe fluoroalkyle en C1 à C10 ou un groupe cyano.

**2.** Électrolyte selon la revendication 1, dans lequel une quantité du premier composé est de 0,2 partie en poids à 5,0 parties en poids sur la base de 100 parties en poids de l'électrolyte pour la batterie rechargeable au lithium.

**3.** Électrolyte selon la revendication 1 ou 2, dans lequel une quantité du deuxième composé est de 1 partie en poids à 5 parties en poids sur la base de 100 parties en poids de l'électrolyte pour la batterie rechargeable au lithium.

**4.** Électrolyte selon l'une quelconque des revendications précédentes, dans lequel une quantité de l'additif est de 1,2 partie en poids à 10 parties en poids sur la base de 100 parties en poids de l'électrolyte pour la batterie rechargeable au lithium.

**5.** Électrolyte selon l'une quelconque des revendications précédentes, dans lequel un rapport pondéral entre le deuxième composé et le premier composé est de 0,2 à 25.

**6.** Électrolyte selon la revendication 5, dans lequel un rapport pondéral entre le deuxième composé et le premier composé dans l'additif est dans une plage de 1 à 5.

**7.** Électrolyte selon l'une quelconque des revendications précédentes, dans lequel la Formule chimique 1 est représentée par au moins l'une parmi la Formule chimique 1-1 ou la Formule chimique 1-1, Formule chimique 1-2

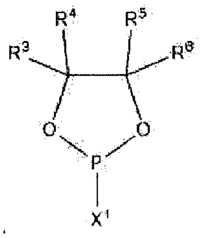

Formule chimique 1-2

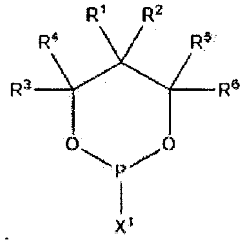

,

dans lequel, dans la Formule chimique 1-1 et la Formule chimique 1-2,
$X^1$ étant un groupe fluoro, un groupe chloro, un groupe bromo ou un groupe iodo, et
$R^1$ à $R^6$ étant chacun indépendamment hydrogène, un groupe alkyle en C1 à C10 substitué ou non substitué, un groupe alcoxy en C1 à C10 substitué ou non substitué, un groupe alcényle en C2 à C10 substitué ou non substitué, ou un groupe alcynyle en C2 à C10 substitué ou non substitué.

**8.** Électrolyte selon la revendication 7, dans lequel le premier composé est l'un quelconque sélectionné parmi les composés énumérés dans le Groupe 1,

Groupe 1

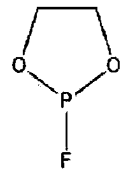 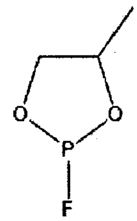 .

9. Électrolyte selon l'une quelconque des revendications précédentes, dans lequel au moins l'un sélectionné parmi $L^{2A}$ et $L^{2B}$ est un groupe alkylène en C1 à C5 substitué ou non substitué.

10. Électrolyte selon l'une quelconque des revendications 1 à 8, dans lequel la Formule chimique 2 est représentée par la Formule chimique 2-1,

Formule chimique 2-1

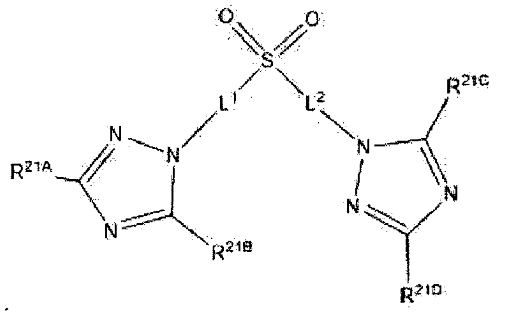 ,

et
dans lequel, dans la Formule chimique 2-1,
$L^1$ et $L^2$ sont chacun indépendamment un groupe alkylène en C2 à C5 substitué ou non substitué, et $R^{21A}$, $R^{21B}$, $R^{21C}$ et $R^{21D}$ sont chacun indépendamment hydrogène, halogène, un groupe alkyle en C1 à C10 substitué ou non substitué, ou un groupe cycloalkyle en C3 à C10 substitué ou non substitué.

11. Électrolyte selon la revendication 10, dans lequel le deuxième composé est l'un quelconque sélectionné parmi les composés énumérés dans le Groupe 2,

Groupe 2 :

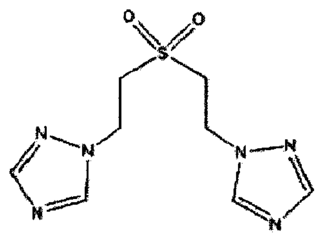 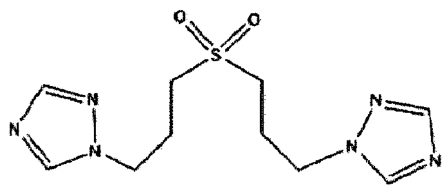 .

12. Batterie rechargeable au lithium (100) comportant :

une électrode positive (10) qui comporte un matériau actif d'électrode positive ;
une électrode négative (20) qui comporte un matériau actif d'électrode négative ; et
l'électrolyte pour la batterie rechargeable au lithium selon la revendication 1.

13. Batterie rechargeable au lithium selon la revendication 12, dans laquelle le matériau actif d'électrode positive

comporte l'oxyde composite de lithium représenté par la Formule chimique 3,

Formule chimique 3 $Li_xM^1_yM^2_zM^3_{1-y-z}O_{2-a}X_a$

et dans laquelle, dans la Formule chimique 3,

$0,5 \leq x \leq 1,8$, $0 \leq a \leq 0,05$, $0 < y \leq 1$, $0 \leq z \leq 1$ et $0 \leq y + z \leq 1$,
$M^1$, $M^2$ et $M^3$ comportent chacun indépendamment au moins un élément sélectionné parmi des métaux tels que Ni, Co, Mn, Al, B, Ba, Ca, Ce, Cr, Fe, Mo, Nb, Si, Sr, Mg, Ti, V, W, Zr, La et une combinaison de ceux-ci, et
X comporte au moins un élément sélectionné parmi F, S, P et Cl.

**14.** Batterie rechargeable au lithium selon la revendication 13, dans laquelle, dans la Formule chimique 3, $M^1$ est Ni, $0,8 \leq y \leq 1$ et $0 \leq z \leq 0,2$.

**15.** Batterie rechargeable au lithium selon l'une quelconque des revendications 12 à 14, dans laquelle le matériau actif d'électrode négative comporte un matériau actif d'électrode négative à base de carbone, un matériau actif d'électrode négative à base de Si, un matériau actif d'électrode négative à base de Sn ou une combinaison de ceux-ci.

FIG. 1

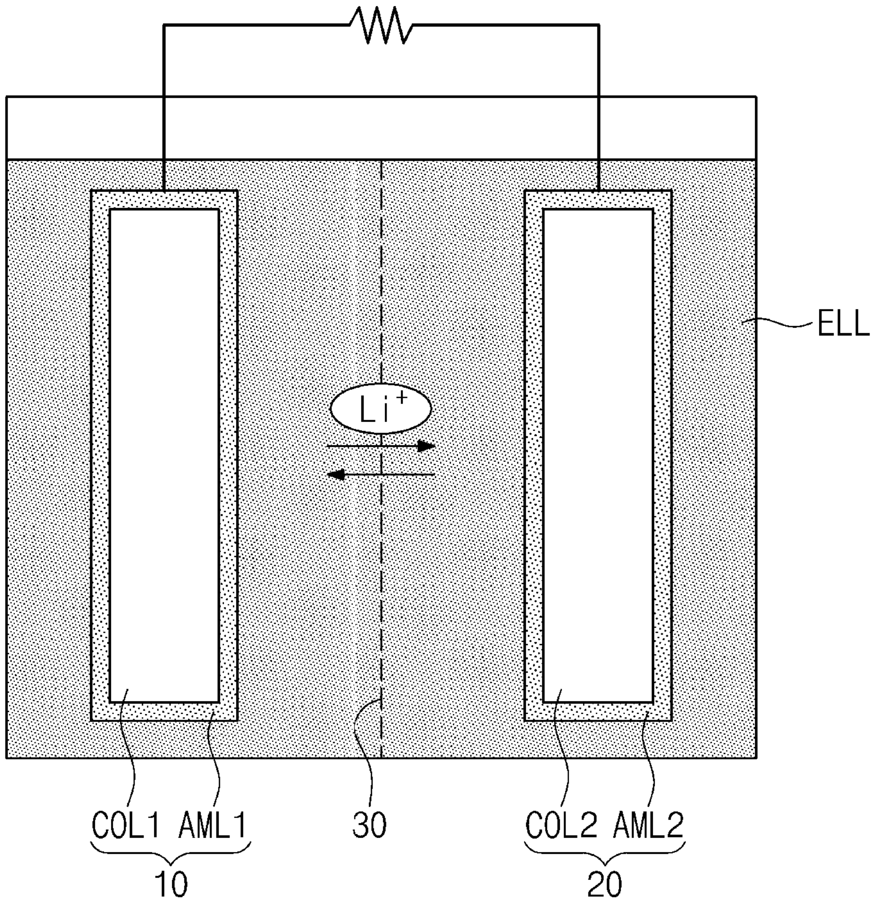

FIG. 2

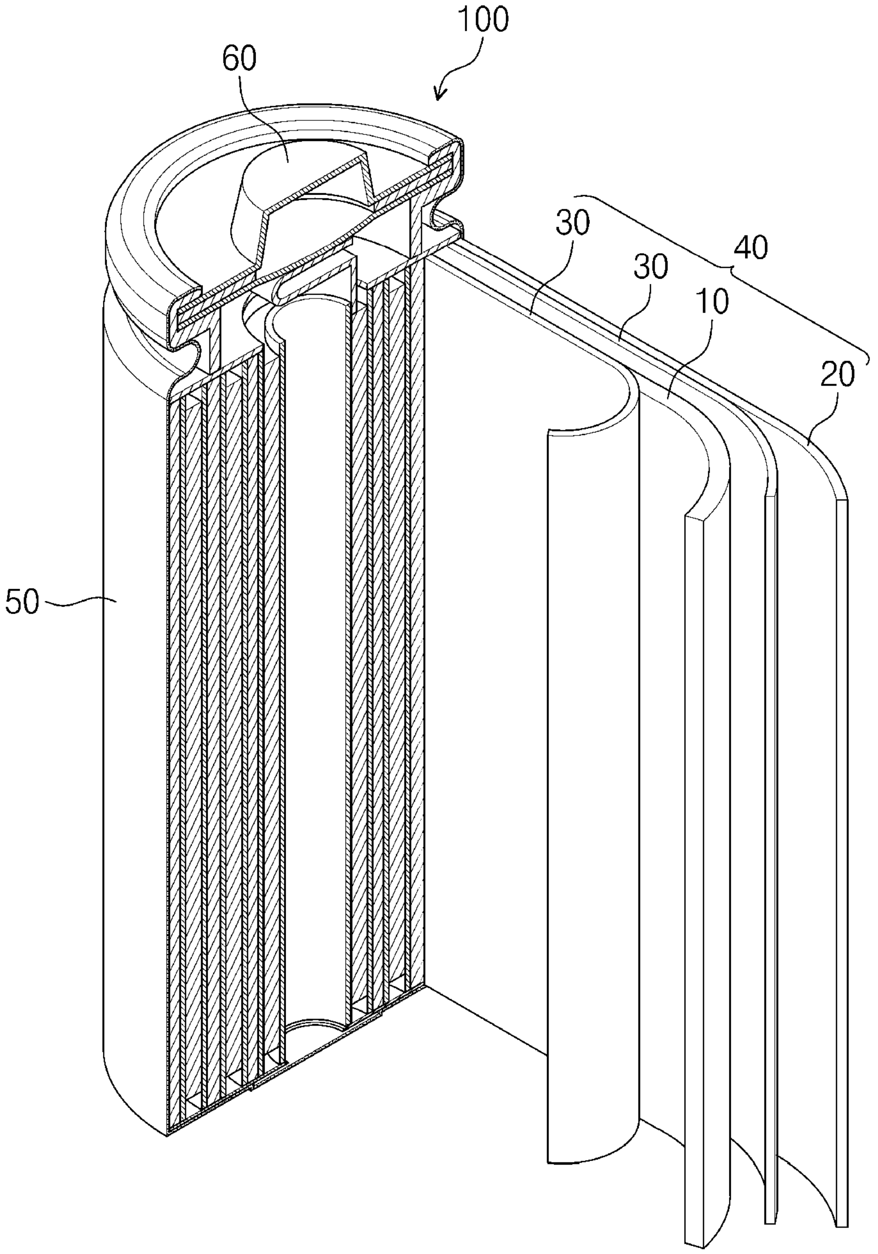

FIG. 3

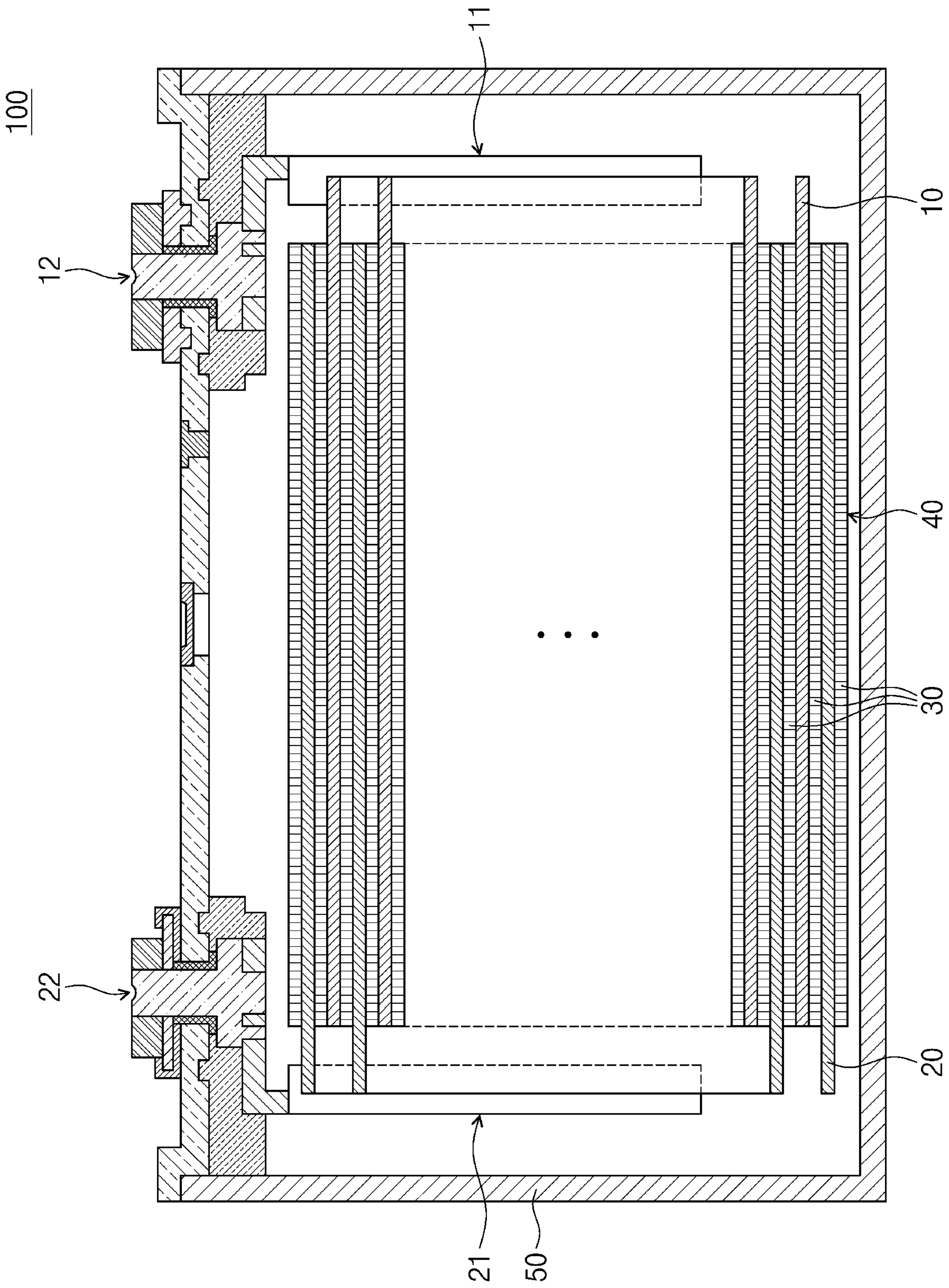

FIG. 4

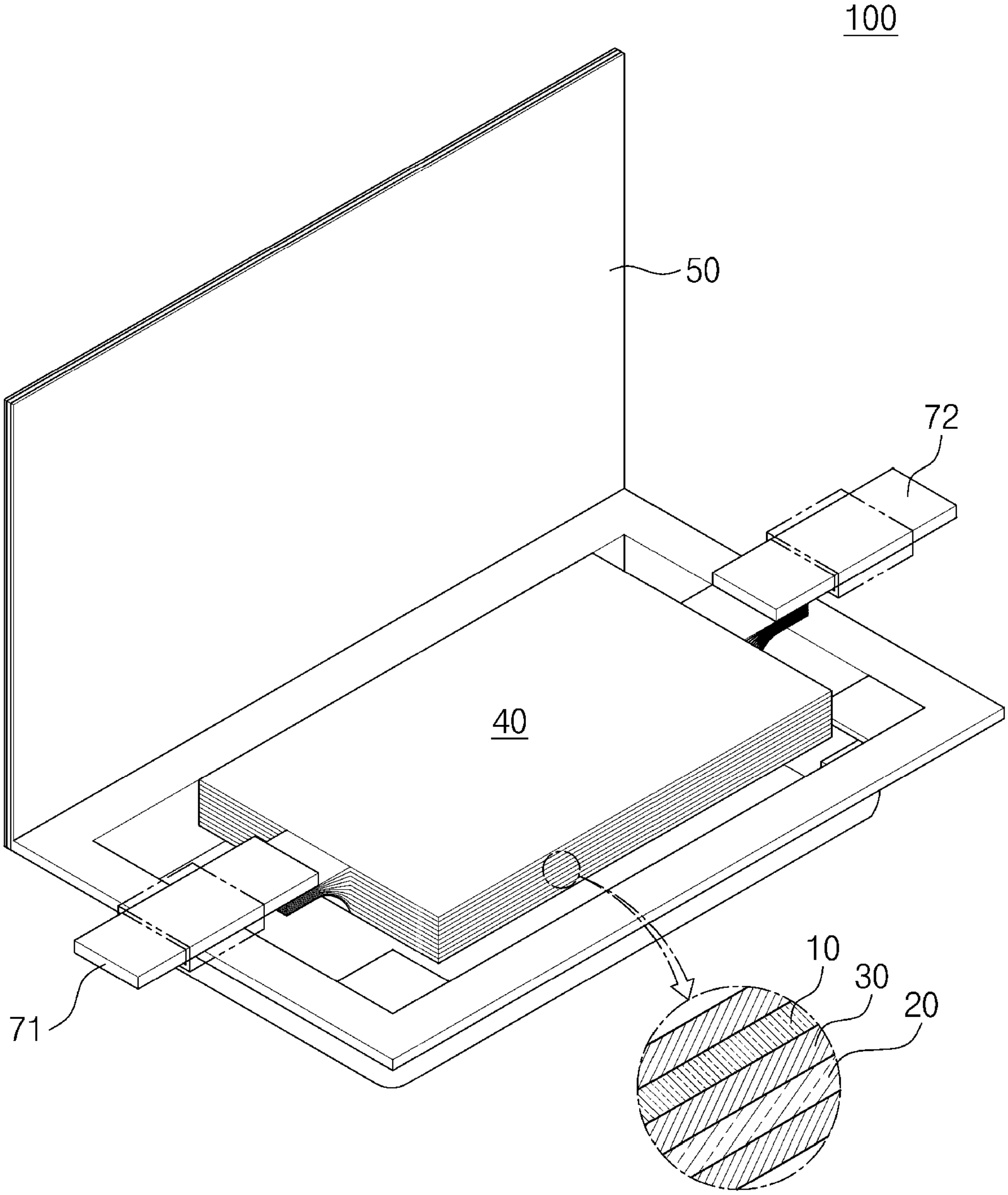

FIG. 5

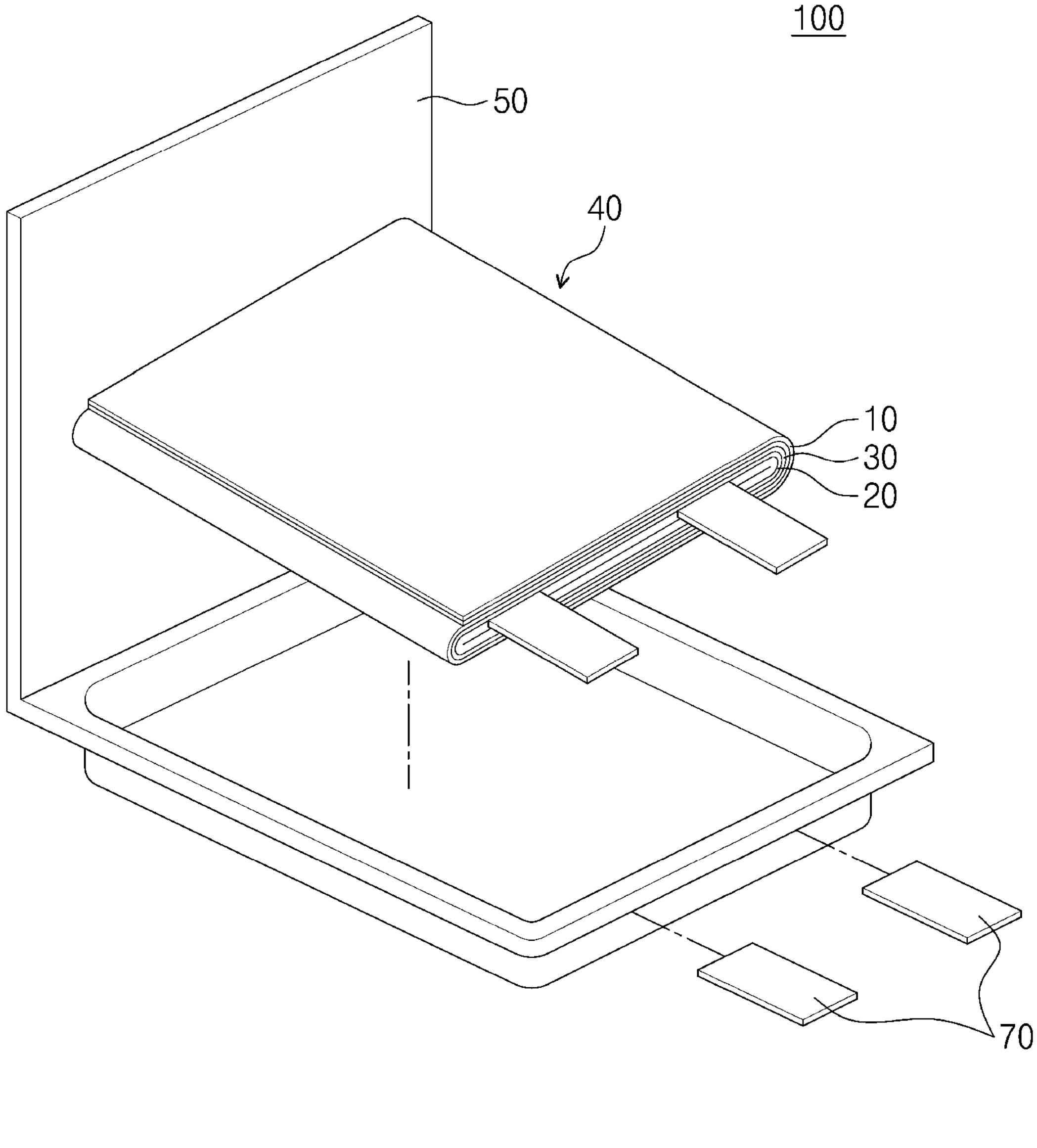

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2024079650 A